# EUROPÄISCHE PATENTSCHRIFT

(11) **EP 2 015 972 B1**
(45) Veröffentlichungstag und Bekanntmachung des Hinweises auf die Patenterteilung: **06.07.2011**
(21) Anmeldenummer: 07724824.3
(22) Anmeldetag: 03.05.2007
(51) Int. Cl.: B60T 10/02, F16D 33/06

(54) **HYDRODYNAMISCHE MASCHINE**
HYDRODYNAMIC MACHINE
MACHINE HYDRODYNAMIQUE

(30) Priorität: 05.05.2006 DE 102006021331
(43) Veröffentlichungstag der Anmeldung: 21.01.2009
(73) Patentinhaber: Voith Turbo GmbH & Co. KG, 89522 Heidenheim (DE)
(72) Erfinder: LAUKEMANN, Dieter, 74541 Vellberg (DE); ADAMS, Werner, 74564 Crailsheim (DE)
(74) Vertreter: Dr. Weitzel & Partner
(86) Internationale Anmeldenummer: PCT/EP2007/003898
(87) Internationale Veröffentlichungsnummer: WO 2007/128489

(56) Entgegenhaltungen:
- DE-A1- 2 614 476
- DE-C- 512 452
- DE-C- 677 160
- US-A- 3 478 516

## Beschreibung

Die Erfindung betrifft eine hydrodynamische Maschine, insbesondere einen hydrodynamischen Retarder.

Es ist bekannt bei hydrodynamischen Maschinen, insbesondere bei Retardern, Maßnahmen zu ergreifen, um die Leerlaufverluste zu reduzieren. Unter Leerlaufverlusten sind dabei jene Verluste zu verstehen, welche im Nichtbetriebszustand der hydrodynamischen Maschine dadurch entstehen, dass ungewollt ein Restdrehmoment vom Primärrad der hydrodynamischen Maschine auf das Sekundärrad der hydrodynamischen Maschine, bei einem Retarder vom Rotor auf den Stator übertragen wird, welches eine entsprechende angeschlossene Antriebsvorrichtung unerwünscht abbremst. Bei Kraftfahrzeugen führt dies zu einem erhöhten Kraftstoffverbrauch.

Bekannte Maßnahmen bestehen beispielsweise darin, die beiden Schaufelräder, beim Retarder Rotor und Stator, im Nichtbetriebszustand axial auseinanderzufahren, um so eine Kreislaufströmung des Restarbeitsmediums im Arbeitsraum zu stören oder zu unterbinden. Andere Maßnahmen sehen vor, Störelemente in den Arbeitsraum einzubringen, welche denselben Zweck haben. Schließlich sind Versuche unternommen worden, um im Nichtbetriebszustand, bei Retardern im Nichtbremsbetrieb, den Arbeitsraum leer zu saugen, um einen Unterdruck in diesem zu erzeugen. Hierfür wurden externe Pumpen, Kreiselpumpen, oder Hubkolbenpumpen, oder Saugzylinder verwendet.

Obwohl die bekannten Maßnahmen bereits zu einer Reduzierung der Leerlaufverluste beitragen konnten, gibt es Raum für Verbesserungen. Insbesondere ist es unerwünscht, dass durch die zusätzliche Maßnahmen zusätzliche Energie, beispielsweise elektrische Energie, verbraucht wird oder dass der konstruktive Aufwand für diese Maßnahmen hoch ist.

Zum druckschriftlichen Stand der Technik wird auf die folgenden Dokumente verwiesen:
DE 512 452 A DE 26 14 476 A1
DE 677 160 A
DE 102 42 736 A1
DE 299 03 829 U1

Die aus dem erstgenannten Dokument DE 512 452 A bekannten Merkmale sind im Oberbegriff von Anspruch 1 zusammengefasst.

Der Erfindung liegt die Aufgabe zugrunde, eine hydrodynamische Maschine anzugeben, bei welcher die Verluste im Nichtbetriebszustand minimiert werden können. Die erfindungsgemäße Ausführung soll sich insbesondere durch einen einfachen konstruktiven Aufbau und einen geringen Energieverbrauch auszeichnen.

Die erfindungsgemäße Aufgabe wird durch eine hydrodynamische Maschine mit den Merkmalen von Anspruch 1 gelöst. In den abhängigen Ansprüchen sind besonders vorteilhafte und zweckmäßige Ausgestaltungen der Erfindung angegeben.

Die erfindungsgemäße hydrodynamische Maschine, welche insbesondere als hydrodynamischer Retarder ausgeführt ist, weist ein beschaufeltes Primärrad und ein beschaufeltes Sekundärrad auf. Die beiden Schaufelräder stehen sich mit ihrer Beschaufelung derart axial gegenüber, dass sie einen Arbeitsraum miteinander ausbilden.

Der Arbeitsraum ist mit einem Arbeitsmedium befüllbar. Im Betriebszustand der hydrodynamischen Maschine wird der Arbeitsraum mit Arbeitsmedium befüllt, so dass sich eine Kreislaufströmung des Arbeitsmediums im Arbeitsraum ausbildet, welche Drehmoment beziehungsweise Drehleistung vom Primärrad auf das Sekundärrad überträgt. Bei der Ausgestaltung der hydrodynamischen Maschine als hydrodynamische Kupplung oder als hydrodynamischer Wandler wird somit Antriebsleistung vom Primärrad (dann Pumpenrad genannt) auf das Sekundärrad (dann Turbinenrad genannt) übertragen. Beim Ausbilden der hydrodynamischen Maschine als Retarder wird das Primärrad (dann Rotor genannt) dadurch abgebremst, dass Drehmoment beziehungsweise Antriebsleistung auf das Sekundärrad (dann Stator genannt) übertragen wird.

Im Nichtbetriebszustand, beim hydrodynamischen Retarder auch Nichtbremsbetrieb genannt, wird der Arbeitsraum entleert, das heißt das Arbeitsmedium wird aus dem Arbeitsraum herausgeleitet. Hierdurch soll eine Drehmomentübertragung beziehungsweise Drehleistungsübertragung vom Primärrad auf das Sekundärrad vermieden werden.

Erfindungsgemäß ist eine Absaugvorrichtung vorgesehen. Die Absaugvorrichtung steht in einer strömungsleitenden Verbindung mit dem Arbeitsraum, um im Nichtbetriebszustand durch Absaugen von Arbeitsmedium und/oder Luft einen Unterdruck im Arbeitsraum zu erzeugen. Unterdruck bedeutet, dass der Druck im Arbeitsraum geringer ist als der Umgebungsdruck, insbesondere als der Druck, gegen welchen die Absaugvorrichtung arbeitet.

Die erfindungsgemäße Absaugvorrichtung ist in der hydrodynamischen Maschine integriert, das heißt es wird insbesondere keine externe Pumpe oder kein externer Saugzylinder verwendet, die/der an der hydrodynamischen Maschine angeschlossen ist.

Die Absaugvorrichtung weist ein Laufrad auf. Gemäß einer Ausführungsform wird das Laufrad durch das Primärrad oder das Sekundärrad gebildet. Gemäß einer alternativen Ausführungsform ist das Laufrad benachbart zu dem Primärrad und/oder dem Sekundärrad angeordnet und wird durch das Primärrad und/oder das Sekundärrad oder eine das Primärrad und/oder Sekundärrad tragende Welle angetrieben.

Die Schaufeln des Laufrads sind derart einem Kanal gegenüberstehend angeordnet, dass sie bei einem Umlaufen des Laufrads eine Förderwirkung in dem Kanal erzeugen. Diese Förderwirkung bewirkt, dass an dem Eintrittsende des Kanals ein Unterdruck erzeugt wird. Das Eintrittsende des Kanals mündet im Arbeitsraum. Somit wird durch das Umlaufen des Laufrads der Absaugvorrichtung Arbeitsmedium und/oder Luft aus dem Arbeitsraum durch den Kanal und aus diesem heraus gepumpt.

Die Schaufeln des Laufrads sind in Umfangsrichtung des Laufrads hintereinander angeordnet und auch der Kanal erstreckt sich in Umfangsrichtung des Laufrads. Ferner weist der Kanal in Umfangsrichtung des Laufrads wenigstens eine Unterbrechung auf, um die Förderwirkung zu erhöhen. Insbesondere ist eine einzige Unterbrechung in Umfangsrichtung vorgesehen, und der Kanal erstreckt sich ununterbrochen über dem gesamten Umfang von einem Ende der Unterbrechung bis zu dem anderen Ende der Unterbrechung, wobei sich die Unterbrechung selbst vorteilhaft über einen nur kleinen Kreisbogen erstreckt, der beispielsweise weniger als 30, 20 oder 15° aufweist. Insbesondere erstreckt sich die Unterbrechung in Umfangsrichtung über weniger als 10°.

Die schaufeln des Laufrads können dem Kanal in Axialrichtung beziehungsweise in Radialrichtung bezogen auf das Laufrad oder bezogen auf die gesamte hydrodynamische Maschine gegenüberstehen. Selbstverständlich sind auch andere Ausführungsformen möglich, beispielsweise ein Gegenüberstehen in einer Richtung schräg nach außen, das heißt mit einem Versatz sowohl in Axialrichtung als auch in Radialrichtung.

Der Kanal kann insbesondere in dem Gehäuse der hydrodynamischen Maschine, welches das Primärrad und/oder das Sekundärrad umschließt, angeordnet, sein beziehungsweise durch dieses ausgebildet werden. Beispielsweise ist der Kanal in Form eines Seitenkanals ausgeführt, das heißt in Form eines durch das Gehäuse seitlich begrenzten Kanals, der auf einer den Schaufeln des Laufrads der Absaugvorrichtung gegenüberstehenden Seite geöffnet ist.

Gemäß einer ersten Ausführungsform wird das Laufrad der Absaugvorrichtung durch das Primärrad oder das Sekundärrad gebildet, und die Schaufeln der Absaugvorrichtung sind auf der vom Arbeitsraum abgewandten Rückseite des entsprechenden Schaufelrads angeordnet. Ferner ist es möglich, bei einer solchen Ausführung die Schaufeln radial außen auf dem Primärrad und/oder dem Sekundärrad anzuordnen.

Gemäß einer alternativen Ausführungsform ist das Laufrad als separates Bauteil zu dem Primärrad und dem Sekundärrad ausgeführt und wird von dem Primärrad oder dem Sekundärrad beziehungsweise einer Welle derselben angetrieben.

Bei der zweitgenannten Ausführung kann das Laufrad beispielsweise durch eine das Primärrad und/oder das Sekundärrad tragende und/oder antreibende Welle angetrieben werden und insbesondere in einem formschlüssigen Eingriff mit dieser Welle stehen.

Die Erfindung soll nachfolgend anhand von Ausführungsbeispielen und den Figuren exemplarisch beschrieben werden.

Es zeigen:
- Figur 1: eine erste erfindungsgemäße Ausführungsform, bei welcher das Laufrad der Absaugvorrichtung durch das Primärrad einer hydrodynamischen Maschine, hier den Rotor eines Retarders, gebildet wird;
- Figur 2: eine zweite erfindungsgemäße Ausführungsform, bei welcher das Laufrad der Absaugvorrichtung getrennt von dem Primärrad und dem Sekundärrad der hydrodynamischen Maschine, hier dem Rotor und dem Stator eines Retarders, angeordnet ist und durch die das Primärrad tragende Welle angetrieben wird;
- Figur 3: eine Draufsicht in Axialrichtung auf das Laufrad der Absaugvorrichtung aus der Figur 2 und einen Schnitt durch Profile desselben;
- Figur 4: eine Draufsicht in Axialrichtung auf einen Seitenkanal, wie er beispielsweise bei den Ausführungen gemäß der Figuren 1 und 2 gestaltet sein kann;
- Figur 5: eine alternative Ausgestaltung eines entsprechenden Seitenkanals.

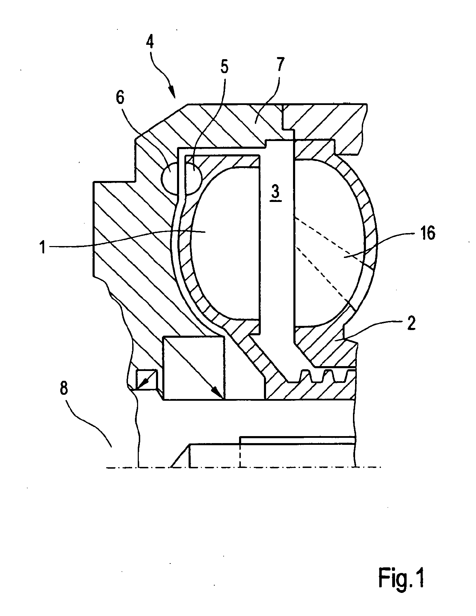

In der Figur 1 erkennt man einen hydrodynamischen Retarder mit einem umlaufenden, beschaufelten Primärrad 1 (Rotor) und einem stationären, beschaufelten Sekundärrad 2 (Stator). Wie man sieht, ist der Rotor axial vom Stator abfahrbar, um im Nichtbremsbetrieb die Leerlaufverluste zu verringern. Alternativ oder zusätzlich ist es möglich, den Stator axial abfahrbar vom Rotor zu gestalten.

Die beiden Schaufelräder, das heißt der Rotor und der Stator, bilden miteinander einen Arbeitsraum aus. Der Arbeitsraum ist über einen Einlasskanal 16 im Stator mit Arbeitsmedium befüllbar.

Im Betriebszustand (Bremsbetrieb) wird der Arbeitsraum 3 mit Arbeitsmedium bis zu einem gewünschten Füllungsgrad befüllt und befüllt gehalten. Im Nichtbetriebszustand (Nichtbremsbetrieb) wird der Arbeitsraum 3 wieder entleert, und zusätzlich werden die beiden Schaufelräder, wie dargelegt, axial auseinander gefahren.

Rotor und Stator werden von einem Gehäuse 7 umschlossen, wobei das Primärrad 1 (der Rotor) drehbar im Gehäuse 7 angeordnet ist, und das Sekundärrad 2 (der Stator) feststehend im Gehäuse 7 eingesetzt ist.

Das Primärrad 1 wird von einer angetriebenen Welle 8 getragen und angetrieben. Die Welle 8 ist beispielsweise über ein integral mit dieser ausgeführtes Ritzel antreibbar.

Auf der Rückseite des Primärrads 1, das heißt auf jener Seite, welche entgegengesetzt zu der die Beschaufelung des Primärrads 1 tragenden Seite angeordnet ist, sind Schaufeln ausgebildet, die einem Kanal 6 in Form eines Seitenkanals im Gehäuse 7 gegenüberstehen. Die Schaufeln 5 bilden eine Absaugvorrichtung 4 aus, welche dazu dient, im Arbeitsraum 3 im Nichtbetriebszustand ein Vakuum beziehungsweise einen Unterdruck zu erzeugen. Wenn das Primärrad 1 umläuft, streicht das Laufrad 5 der Absaugvorrichtung 4, welches durch die Rückseite des Primärrads 1 ausgebildet wird, über den Kanal 6 hinweg und erzeugt somit eine fördernde Wirkung im Kanal 6.

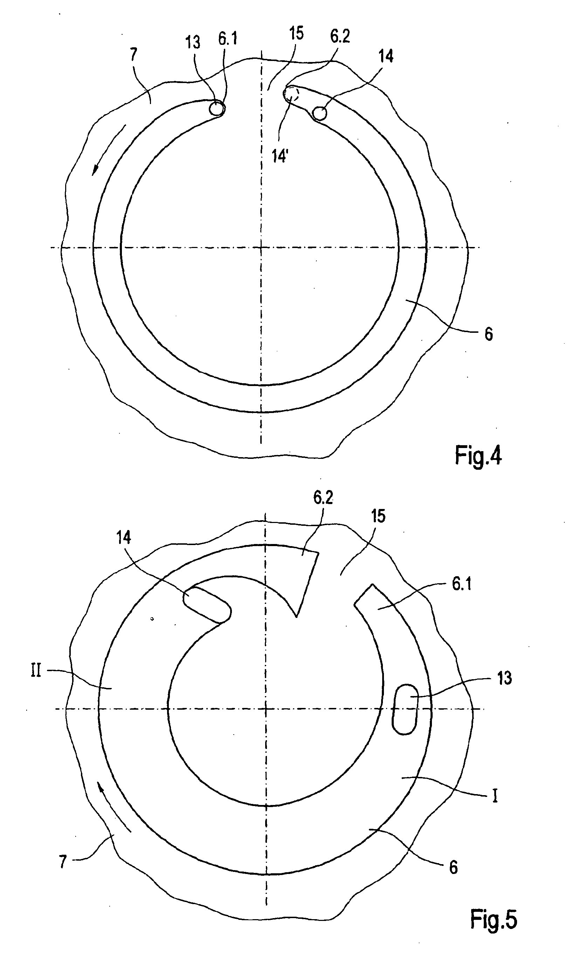

Wie man sieht, bildet das Laufrad 5 zusammen mit dem Kanal 6 ebenfalls einen torusförmigen Arbeitsraum aus, von dem je eine axiale Hälfte von dem Gehäuse 7 und dem Laufrad 5 gebildet wird. Der Kanal 6 ist jedoch vorteilhaft in Umfangsrichtung an einer Stelle mit einer Unterbrechung 15 versehen, wie man in den Figuren 4 und 5, die eine axiale Draufsicht auf den Kanal 6 zeigen, erkennen kann. Durch diese Unterbrechung 15 wird dem Kanal 6 in einer axialen Draufsicht eine hufeisenförmige beziehungsweise sichelförmige Form verliehen, mit einem Eintrittsende 6.1 in Drehrichtung des Laufrads 5 gesehen (siehe den Pfeil) hinter der Unterbrechung 15 und einem Austrittsende 6.2 des Kanals 6 in Drehrichtung des Laufrads 5 gesehen vor der Unterbrechung 15. Unmittelbar im Eintrittsende 6.1 ist eine Saugöffnung 13 positioniert, welche in einer strömungsleitenden Verbindung mit dem Arbeitsraum 3 steht. Abweichend von der Figur 4 ist gemäß der Figur 5 ein Abstand zwischen dem Eintrittsende 6.1 und der Saugöffnung 13 vorgesehen.

Exakt im Austrittsende 6.2 oder mit einem Abstand zu diesem ist eine Drucköffnung 14 vorgesehen. Diese Drucköffnung 14 steht in der Regel in einer strömungsleitenden Verbindung mit dem externen Arbeitsmediumkreislauf (nicht gezeigt) beziehungsweise einem Vorratsbehälter. Wie durch die gestrichelt dargestellte Drucköffnung 14' angedeutet ist, die exakt im Austrittsende 6.2 angeordnet ist, können auch zwei Drucköffnungen nebeneinander, beispielsweise eine mit und die andere ohne Abstand zum Austrittsende 6.2 vorgesehen sein. Dasselbe gilt sinngemäß für die Saugöffnung am Eintrittsende.

Wenn nun das Laufrad 5 umläuft, so fördert es Arbeitsmedium beziehungsweise Luft aus der Saugöffnung 13 zu der Drucköffnung 14 und aus der Drucköffnung 14 heraus. Hierdurch entsteht in der Saugöffnung 13 ein Unterdruck, welcher dazu führt, dass Arbeitsmedium beziehungsweise Luft aus dem Arbeitsraum 3 in den Kanal 6 und aus dessen Austrittsende 6.2 heraus gepumpt wird. Der Arbeitsraum 3 wird somit vollständig oder im wesentlichen vollständig von Arbeitsmedium entleert.

Besonders vorteilhaft nimmt der Strömungsquerschnitt des Kanals 6 beginnend an seinem Eintrittsende 6.1 bis zu seinem Austrittsende 6.2 stetig und/oder sprunghaft ab. Alternativ oder zusätzlich kann die radial innere Wandung des Kanals 6 beginnend im Eintrittsende 6.1 oder an der Saugöffnung 13 bis zum Austrittsende 6.2 beziehungsweise bis zur Drucköffnung 14 zunehmend radial weiter innen verlaufen. Ebenso zusätzlich oder alternativ kann auch die Tiefe in Axialrichtung des Kanals 6 beginnend an dem Eintrittsende 6.1 und/oder der Saugöffnung 13 bis zu dem Austrittsende 6.2 und/oder der Drucköffnung 14 immer weiter abnehmen. Hierdurch wird erreicht, dass ein sich bildender Film aus Arbeitsmedium auch bei einer Teilfüllung des Kanals 6 mit Arbeitsmedium in der Lage ist, Luft aus der Saugöffnung 13 beziehungsweise aus dem Arbeitsraum 3 mit sich zu führen und durch die Drucköffnung 14 heraus zu transportieren. Somit kann nicht nur Arbeitsmedium aus dem Arbeitsraum 3, sondern auch Luft aus dem Arbeitsraum 3 abgepumpt werden.

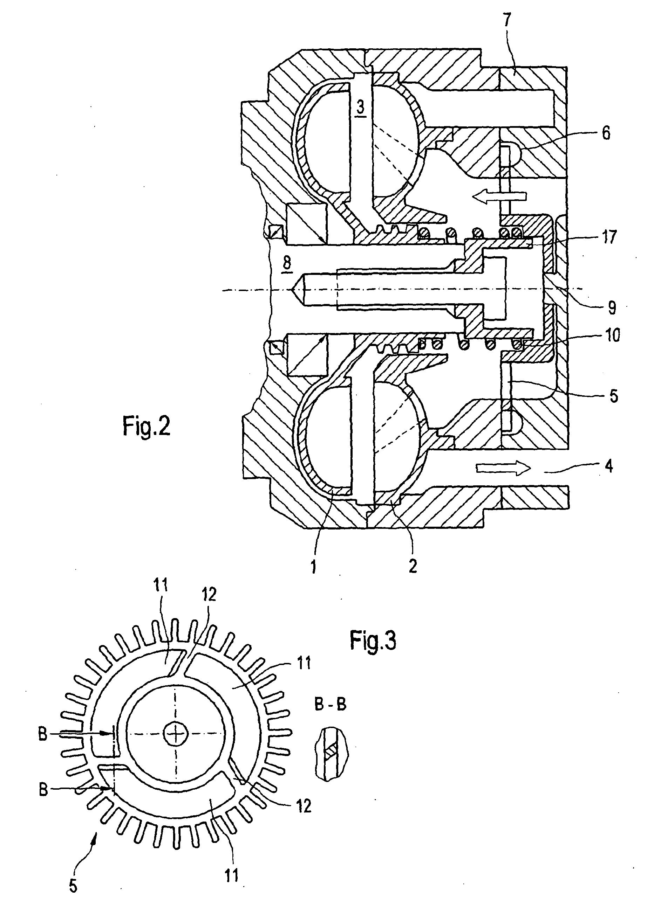

In der Figur 2 ist eine Ausführungsform dargestellt, bei welcher das Laufrad 5 der Absaugvorrichtung 4 getrennt von dem Primärrad 1 und dem Sekundärrad 2 angeordnet ist. Bei der gezeigten Ausführung wird das Laufrad 5 der Absaugvorrichtung 4 von der das Primärrad 1 tragenden Welle 8 angetrieben und ist auf einem Zapfen 9 innen an der Gehäusewand im Gehäuse 7 gelagert.

Diese Lagerung des Laufrads 5 auf dem Zapfen 9 hat den Vorteil, dass das Laufrad 9 mit einem geringeren Spiel in Axialrichtung und/oder Radialrichtung gelagert ist, im Vergleich zu einer Ausführung, bei der das Laufrad 5 fliegend von der Welle 8 getragen wird.

Damit das Laufrad 5 sicher auf dem Zapfen 9 gehalten wird, wird es mittels einer Druckfeder 10 auf den Zapfen 9 gedrückt.

Die Anordnung des Laufrads 5 ist derart, dass das Laufrad 5 und das Primärrad 1 das Sekundärrad 2 (den Stator des hydrodynamischen Retarders) sandwichartig zwischen sich einschließen.

Das Laufrad 5 wird von der Welle 8 dadurch angetrieben, dass zwischen dem Laufrad 5 und der Welle 8 ein Mitnehmer 17, der in der gezeigten Ausführung im Querschnitt gesehen becherförmig gestaltet ist, angeordnet ist, welcher in einem formschlüssigen Eingriff mit der Welle 8 und dem Laufrad 5 steht. Bei der gezeigten Ausführung ist der Mitnehmer 17 stirnseitig auf die Welle 8 aufgeschraubt und dient zugleich der Führung der Druckfeder 10 in Axialrichtung.

Das Laufrad 5 weist, wie man insbesondere in der Figur 3 erkennen kann, eine Vielzahl von Aussparungen 11 auf, die in Umfangsrichtung des Laufrads 5 durch Stege 12 voneinander getrennt sind. Durch diese Aussparungen 11 strömt das Arbeitsmedium, bevor es in den Arbeitsraum 3 gelangt, siehe die Pfeile in der Figur 2.

Die Stege 12 sind derart gestaltet, dass sie die Zuströmung in den Arbeitsraum 3 beziehungsweise die Abströmung aus dem Arbeitsraum 3 des Arbeitsmediums nicht stören und insbesondere unterstützen. So weisen die Stege 12 eine Profilierung auf, welche eine Pumpwirkung auf das Arbeitsmedium beziehungsweise auch auf durchströmende Luft erzeugt. Ein Beispiel für ein solches Profil ist in der Schnittdarstellung B-B gezeigt. Wie man sieht, sind die Stege gegenüber der Ebene eines Radialschnitts durch die Welle 8 beziehungsweise das Laufrad 5 geneigt ausgeführt.

Das Laufrad 5 weist bei der in der Figur 2 und der Figur 3 gezeigten Ausführung in einem Querschnitt in Axialrichtung gesehen rechteckförmige Schaufeln auf. In einer Draufsicht gesehen hat somit das Laufrad 5 mit seinen Schaufeln eine sternförmige Gestalt, siehe die Figur 3. Alternativ sind andere Schaufelformen denkbar, beispielsweise eine solche, wie sie bei dem Laufrad 5 in der Figur 1 gezeigt ist.

Der Kanal 6, welcher wiederum die Form eines Halbtorus aufweist, kann beispielsweise wieder derart gestaltet sein, wie dies mit Bezug auf die Figuren 4 und 5 beschrieben worden ist.

Alternativ zu der gezeigten Ausführung kann der Kanal 6 auch derart ausgeführt sein, dass er die Schaufeln des Schaufelrads 5 in Axialrichtung beidseitig mit einem freien Strömungsquerschnitt umschließt, insbesondere derart, dass die Schaufeln in einem Axialschnitt betrachtet in Axialrichtung mittig im Kanal 6 angeordnet sind.

## Patentansprüche

1. Hydrodynamische Maschine, insbesondere hydrodynamischer Retarder,
1.1 mit einem beschaufelten Primärrad (1) und einem beschaufelten Sekundärrad (2), die sich mit ihren Beschaufelungen derart axial gegenüberstehend angeordnet sind, dass sie einen Arbeitsraum (3) miteinander ausbilden;
1.2 der Arbeitsraum (3) ist für einen Betriebszustand mit einem Arbeitsmedium befüllbar, um mittels einer Kreislaufströmung des Arbeitsmediums im Arbeitsraum (3) Drehmoment vom Primärrad (1) auf das Sekundärrad (2) zu übertragen;
1.3 der Arbeitsraum (3) ist für einen Nichtbetriebszustand von dem Arbeitsmedium entleerbar, um eine Drehmomentübertragung vom Primärrad (1) auf das Sekundärrad (2) zu vermeiden;
1.4 es ist eine Absaugvorrichtung (4) mit einer strömungsleitenden Verbindung am Arbeitsraum (3) angeschlossen, um im Nichtbetriebszustand Arbeitsmedium und/oder Luft zum Ausbilden eines Unterdrucks im Arbeitsraum (3) aus dem Arbeitsraum (3) abzusaugen; **gekennzeichnet durch** die folgenden Merkmale:
1.5 die Absaugvorrichtung (4) ist in der hydrodynamischen Maschine integriert;
1.6 die Absaugvorrichtung (4) weist ein Laufrad (5) mit einer Vielzahl in Umfangsrichtung des Laufrads (5) hintereinander angeordneten Schaufeln an dem Primärrad (1) oder dem Sekundärrad (2) oder benachbart zu einem von diesen auf, welches **durch** das Primärrad (1) oder das Sekundärrad (2) oder eine das Primärrad (1) und/oder das Sekundärrad (2) tragende Welle (8) angetrieben wird;
1.7 die Schaufeln des Laufrads (5) sind derart einem Kanal (6) gegenüberstehend angeordnet, dass sie bei einem Umlaufen des Laufrads (5) eine Förderwirkung derart in dem Kanal (6) erzeugen, dass an dessen Eintrittsende (6.1) ein Unterdruck erzeugt wird;
1.8 der Kanal (6) weist in Umfangsrichtung des Laufrads (5) wenigstens eine Unterbrechung (15) oder genau eine einzige Unterbrechung (15) auf;
1.9 das Eintrittsende (6.1) des Kanals (6) mündet im Arbeitsraum (3).

2. Hydrodynamische Maschine gemäß Anspruch 1, **dadurch gekennzeichnet, dass** die hydrodynamische Maschine ein Gehäuse (7) aufweist, welches das Primärrad (1) und/oder das Sekundärrad (2) umschließt, und der Kanal (6) insbesondere in Form eines Seitenkanals durch das Gehäuse (7) gebildet wird.

3. Hydrodynamische Maschine gemäß einem der Ansprüche 1 oder 2, **dadurch gekennzeichnet, dass** die hydrodynamische Maschine ein hydrodynamischer Retarder mit einem Rotor als Primärrad (1) und einem Stator als Sekundärrad (2) ist.

4. Hydrodynamische Maschine gemäß einem der Ansprüche 1 bis 3, **dadurch gekennzeichnet, dass** das Laufrad (5) durch das Primärrad (1) gebildet wird, und die Schaufeln der Absaugvorrichtung auf der vom Arbeitsraum (3) abgewandten Rückseite des Primärrads (1) oder radial außen auf dem Primärrad (1) angeordnet sind.

5. Hydrodynamische Maschine gemäß einem der Ansprüche 1 bis 3, **dadurch gekennzeichnet, dass** das Laufrad (5) als separates Bauteil von dem Primärrads (1) oder dem Sekundärrad (2) angetrieben wird und insbesondere im Gehäuse (7) gelagert ist.

6. Hydrodynamische Maschine gemäß Anspruch 5, **dadurch gekennzeichnet, dass** das Laufrad (5) von einer das Primärrad (1) tragenden und antreibenden Welle (8) angetrieben wird, insbesondere durch einen wenigstens mittelbaren formschlüssigen Eingriff zwischen der Welle (8) und dem Laufrad (5).

7. Hydrodynamische Maschine gemäß einem der Ansprüche 5 oder 6, **dadurch gekennzeichnet, dass** das Laufrad (5) auf einem Zapfen (9) im Gehäuse, insbesondere koaxial zu dem Primärrad (1) und/oder dem Sekundärrad (2), getragen wird.

8. Hydrodynamische Maschine gemäß Anspruch 7, **dadurch gekennzeichnet, dass** sich das Laufrad (5) insbesondere über eine Druckfeder (10) an der das Primärrad (1) tragenden Welle (8) oder an dem Primärrad (1) und/oder dem Sekundärrad (2) abstützt, so dass es drehbar auf dem Zapfen (9) gehalten wird.

9. Hydrodynamische Maschine gemäß einem der Ansprüche 5 bis 8, **dadurch gekennzeichnet, dass** das Laufrad (5) eine Vielzahl von Aussparungen (11) aufweist, über welche das Arbeitsmedium im Betriebszustand oder beim Übergang in den Betriebszustand in den Arbeitsraum (3) strömt.

10. Hydrodynamische Maschine gemäß Anspruch 9, **dadurch gekennzeichnet, dass** die Aussparungen (11) in Umfangsrichtung des Laufrads (5) durch profilierte Stege (12) voneinander getrennt sind, wobei die Profilierung der Stege (12) eine strömungsunterstützende oder strömungsfördernde Wirkung auf das durch die Aussparungen (11) strömende Arbeitsmedium ausübt.

11. Hydrodynamische Maschine gemäß einem der Ansprüche 1 bis 10, **dadurch gekennzeichnet, dass** der Kanal (6) in Umfangsrichtung des Laufrads (5) insbesondere unmittelbar im Gehäuse (7) verläuft und an einer vorgegebenen Position derart unterbrochen ist, dass in Drehrichtung des Laufrads (5) betrachtet vor der Unterbrechung (15) ein Austrittsende (6.2) und hinter der Unterbrechung (15) das Eintrittsende (6.1) gebildet wird, wobei in dem Eintrittsende (6.1) oder im Bereich desselben eine Saugöffnung (13) und in dem Austrittsende (6.2) oder im Bereich desselben eine Drucköffnung (14) ausgeführt ist, so dass durch das Umlaufen des Laufrads (5) Arbeitsmedium und/oder Luft von der Saugöffnung (13) zu der Drucköffnung (14) und aus dieser hinaus gepumpt wird.

12. Hydrodynamische Maschine gemäß Anspruch 11, **dadurch gekennzeichnet, dass** der Kanal (6) von seinem Eintrittsende (6.1) zu seinem Austrittsende (6.2) einen sich verjüngenden Strömungsquerschnitt aufweist.

13. Hydrodynamische Maschine gemäß Anspruch 11 oder Anspruch 12, **dadurch gekennzeichnet, dass** die Saugöffnung (13) und/oder die Drucköffnung (14) mit einem vorgegebenen Abstand entfernt von dem jeweiligen zugeordneten Ende, Eintrittsende (6.1) oder Austrittsende (6.2), angeordnet sind.

14. Hydrodynamische Maschine gemäß einem der Ansprüche 1 bis 13, **dadurch gekennzeichnet, dass** die Schaufeln des Laufrads (5) dem Kanal (6) in Radialrichtung und/oder in Axialrichtung der hydrodynamischen Maschine gegenüberstehen.

## Claims

1. A hydrodynamic machine, in particular a hydrodynamic retarder,
1.1 fitted with a bladed primary wheel (1) and a bladed secondary wheel (2), which are arranged with their blading axially opposite to one another in such a way that they form together a working chamber (3);
1.2 the working chamber (3) can be filled with a working medium in operating mode, in order to transmit the torque from the primary wheel (1) to the secondary wheel (2) by means of a circular flow of the working medium in the working chamber (3);
1.3 the working chamber (3) can be emptied of the working medium in non-operating mode, to prevent any torque transmission from the primary wheel (1) to the secondary wheel (2);
1.4 a suction device (4) is connected to a flow-guiding connection on the working chamber (3), in order to suck out working medium and/or air from the working chamber (3) to form a subpressure in the working chamber (3) in non-operating mode;
**characterised by** the following features:
1.5 the suction device (4) is incorporated in the hydrodynamic machine;
1.6 the suction device (4) includes a rotor disc (5) having a plurality of blades arranged behind one another in the circumferential direction of the rotor disc (5) on the primary wheel (1) or on the secondary wheel (2) or adjoining one of them, which is driven by the primary wheel (1) or the secondary wheel (2) or a shaft (8) carrying the primary wheel (1) and/or the secondary wheel (2);
1.7 the blades of the rotor disc (5) are arranged opposite to a channel (6) in such a way that they generate a conveying effect in the channel (6) during a rotation of the rotor disc (5) in such a way that a subpressure is generated at their admission end (6.1);
1.8 the channel (6) includes at least one break (15) or a single break (15) in the circumferential direction of the rotor disc (5);
1.9 the admission end (6.1) of the channel (6) emerges in the working chamber (3).

2. A hydrodynamic machine according to claim 1, **characterised in that** the hydrodynamic machine includes a housing (7) which encloses the primary wheel (1) and/or the secondary wheel (2), and the channel (6) is designed in particular in the form of a side channel through the housing (7).

3. A hydrodynamic machine according to one of claims 1 or 2, **characterised in that** the hydrodynamic machine is a hydrodynamic retarder fitted with a rotor as a primary wheel (1) and with a stator as a secondary wheel (2).

4. A hydrodynamic machine according to one of claim 1 to 3, **characterised in that** the rotor disc (5) is formed by the primary wheel (1), and the blades of the suction device are arranged on the back of the primary wheel (1) facing away from the working chamber (3) or radially and outwardly on the primary wheel (1).

5. A hydrodynamic machine according to one of claim 1 to 3, **characterised in that** the rotor disc (5) is driven as a separate component from the primary wheel (1) or the secondary wheel (2) and is mounted in particular in the housing (7).

6. A hydrodynamic machine according to claim 5, **characterised in that** the rotor disc (5) is driven by a shaft (8) carrying and driving the primary wheel (1) in particular by an at least indirectly positive engagement between the shaft (8) and the rotor disc (5).

7. A hydrodynamic machine according to one of claims 5 or 6, **characterised in, that** the rotor disc (5) is carried on a journal (9) in the housing, in particular coaxially to the primary wheel (1) and/or the secondary wheel (2).

8. A hydrodynamic machine according to claim 7, **characterised in that** the rotor disc (5) is supported in particular via a pressure spring (10) on the shaft (8) carrying the primary wheel (1) or on the primary wheel (1) and/or the secondary wheel (2), so that it is maintained rotatably on the journal (9).

9. A hydrodynamic machine according to one of claims 5 to 8, **characterised in that** the rotor disc (5) presents a plurality of recesses (11) via which the working medium flows into the working chamber (3) when in operating mode or when switching to operating mode.

10. A hydrodynamic machine according to claim 9, **characterised in that** the recesses (11) in the circumferential direction of the rotor disc (5) are separate from one another by profiled webs (12), wherein the profiling of the webs (12) exerts an effect on the working medium flowing through the recesses (11) by maintaining or conveying said flow.

11. A hydrodynamic machine according to one of claim 1 to 10, **characterised in that** the channel (6) extends in the circumferential direction of the rotor disc (5) in particular directly in the housing and is interrupted in a preset position tin such a way that as seen in the rotation direction of the rotor disc considered an outlet end (6.2) is formed before the break (15) and the admission end (6.1) behind the break (15), whereas in the admission end (6.1) or in the region thereof a suction opening (13) is provided and in the outlet end (6.2) or in the region thereof a pressure opening (14) is provided, so that due to the rotation of the rotor disc (5) working medium and/or air is pumped from the suction opening (13) to the pressure opening (14) and the out of said opening.

12. A hydrodynamic machine according to claim 11, **characterised in that** the channel (6) presents a tapering flow cross-section from its admission end (6.1) to its outlet end (6.2).

13. A hydrodynamic machine according to claim 11 or claim 12, **characterised in that** the suction opening (13) and/or the pressure opening (14) are arranged at a preset distance from the corresponding end allocated, admission end (6.1) or outlet end (6.2).

14. A hydrodynamic machine according to one of claims 1 to 13, **characterised in that** the blades of the rotor disc (5) are opposed to the channel (6) in radial direction and/or in axial direction of the hydrodynamic machine.

## Revendications

1. Machine hydrodynamique, en particulier retardateur hydrodynamique,
1.1 pourvue d'une roue primaire (1) à aubes et d'une roue secondaire à aubes (2), qui sont disposées axialement opposées par leurs aubages de telle sorte qu'elles forment ensemble une chambre de travail (3);
1.2 la chambre de travail peut être remplie d'un fluide de travail pour un mode d'exploitation donné, pour transmettre le couple de rotation de la roue primaire (1) à la roue secondaire (2) par un écoulement circulaire du fluide de travail dans la chambre de travail (3);
1.3 la chambre de travail (3) peut être vidée du fluide de travail pour un mode hors exploitation donné, pour éviter toute transmission de couple de rotation de la roue primaire (1) à la roue secondaire (2);
1.4 un dispositif d'aspiration (4) est connecté à une liaison conductrice d'écoulement dans la chambre de travail (3), pour aspirer le fluide de travail et/ou l'air hors de la chambre de travail (3) pour générer une dépression dans la chambre de travail (3) en mode hors exploitation; présentant les caractéristiques suivantes:
1.5 le dispositif d'aspiration (4) est intégré à la machine hydrodynamique;
1.6 le dispositif d'aspiration (4) présente un disque de rotor (5) avec une pluralité d'aubes disposées les unes derrière les autres dans le sens de la circonférence du disque de rotor (5) sur la roue primaire (1) ou sur la roue secondaire (2) ou encore à proximité de l'une de celles-ci, qui est entraîné par la roue primaire (1) ou la roue secondaire (2) ou un arbre (8) portant la roue primaire (1) et/ou la roue secondaire (2);
1.7 les aubes du disque de rotor (5) sont opposées à un canal (6) de telle sorte qu'elles créent un effet de convoyage dans le canal (6) lors de la rotation du disque de rotor (5) de telle sorte qu'une dépression est générée à son extrémité d'admission (6.1);
1.8 le canal (6) présente au moins une rupture (15) ou plus précisément une seule rupture (15) dans le sens de la circonférence du disque de rotor (5);
1.9 l'extrémité d'admission (6.1) du canal (6) émerge dans la chambre de travail (3).

2. Machine hydrodynamique conformément à la revendication 1, **caractérisée en ce que** la machine hydrodynamique présente un logement (7) qui entoure la roue primaire (1) et/ou la roue secondaire (2), et le canal (6) est en particulier sous forme de canal latéral à travers le logement (7).

3. Machine hydrodynamique conformément à l'une des revendications 1 ou 2, **caractérisée en ce que** la machine hydrodynamique est un retardateur hydrodynamique avec un rotor comme roue primaire (1) et un stator comme roue secondaire (2).

4. Machine hydrodynamique conformément à l'une des revendications 1 à 3, **caractérisée en ce que** le disque de rotor (5) est constitué de la roue primaire (1), et les aubes du dispositif d'aspiration sont disposées sur la face arrière de la roue primaire (1) tournant le dos à la chambre de travail (3) ou radialement à l'extérieur sur la roue primaire (1).

5. Machine hydrodynamique conformément à l'une des revendications 1 à 3, **caractérisée en ce que** le disque de rotor (5) est entraîné comme composant séparé par la roue primaire (1) ou la roue secondaire (2) et est monté dans le logement (7) en particulier.

6. Machine hydrodynamique conformément à la revendication 5, **caractérisée en ce que** le disque de rotor (5) est entraîné par un arbre (8) portant et entraînant la roue primaire (1), en particulier par un engagement au moins indirectement positif entre l'arbre (8) et le disque de rotor (5).

7. Machine hydrodynamique conformément à l'une des revendications 5 ou 6, **caractérisée en ce que** le disque de rotor (5) est porté sur un tourillon (9) dans le logement, en particulier coaxialement à la roue primaire (1) et/ou la roue secondaire (2).

8. Machine hydrodynamique conformément à la revendication 7, **caractérisée en ce que** le disque de rotor (5) s'appuie en particulier par le biais d'un ressort pression (10) sur l'arbre (8) portant la roue primaire (1) ou bien sur la roue primaire (1) et/ou la roue secondaire (2), pour être maintenue de manière rotative sur le tourillon (9).

9. Machine hydrodynamique conformément à l'une des revendications 5 à 8, **caractérisée en ce que** le disque de rotor (5) présente une pluralité d'évidements (11) par le biais desquels le fluide de travail s'écoule dans la chambre de travail (3) en mode d'exploitation ou lors du passage en mode d'exploitation.

10. Machine hydrodynamique conformément à la revendication 9, **caractérisée en ce que** les évidements (11) sont séparés les uns des autres dans le sens de la circonférence du disque de rotor (5) par des âmes profilées (12) tandis que le profilage des âmes exerce un effet sur le fluide de travail s'écoulant à travers les évidements (11) en maintenant ou en stimulant ledit écoulement.

11. Machine hydrodynamique conformément à l'une des revendications 1 à 10, **caractérisée en ce que** le canal (6) passe dans le sens de la circonférence du disque de rotor (5) en particulier directement dans le logement (7) et est interrompu en une position prédéterminée de telle sorte que vu dans le sens de rotation du disque de rotor une extrémité de sortie (6.2) est formée avant la rupture (15) et l'extrémité d'admission (6.1) est formée derrière la rupture (15), alors qu'une ouverture d'aspiration (13) est pratiquée dans l'extrémité d'admission (6.1) ou au voisinage de celle-ci et une ouverture à pression (14) est pratiquée dans l'extrémité de sortie (6.2) ou au voisinage de celle-ci, de telle sorte que la rotation du disque de rotor (5) permet de pomper du fluide de travail et/ou de l'air de l'ouverture d'aspiration (13) à l'ouverture à pression (14) et hors de celle-ci.

12. Machine hydrodynamique conformément à la revendication 11, **caractérisée en ce que** le canal (6) présente une section transversale d'écoulement se rétrécissant de son extrémité d'admission (6.1) à son extrémité de sortie (6.2).

13. Machine hydrodynamique conformément à la revendication 11 ou la revendication 12, **caractérisée en ce que** l'ouverture d'aspiration (13) et/ou l'ouverture à pression (14) sont disposées à un distance prédéterminée de leur extrémité associée correspondante, extrémité d'admission (6.1) ou extrémité de sortie (6.2).

14. Machine hydrodynamique conformément à l'une des revendications 1 à 13, **caractérisée en ce que** les aubes du disque de rotor (5) sont opposées au canal (6) dans la direction radiale et/ou dans la direction axiale de la machine hydrodynamique.
